# FASCICULE DE BREVET EUROPEEN

(11) **EP 3 572 818 B1**
(45) Date de publication et mention de la délivrance du brevet: **04.08.2021**
(21) Numéro de dépôt: 19174227.9
(22) Date de dépôt: 13.05.2019
(51) Int. Cl.: G01P 15/08, G08C 19/02, G01D 21/00

(54) **DISPOSITIF ELECTRONIQUE DE MESURE D'UNE GRANDEUR DETERMINEE PRESENTANT UNE INTERFACE DEUX FILS**
ELEKTRONISCHE VORRICHTUNG ZUM MESSEN EINER BESTIMMTEN GRÖSSE, DIE EINE ZWEI-DRAHT-SCHNITTSTELLE UMFASST
ELECTRONIC DEVICE FOR MEASURING A DETERMINED QUANTITY HAVING A TWO-WIRE INTERFACE

(30) Priorité: 22.05.2018 FR 1854259
(43) Date de publication de la demande: 27.11.2019
(73) Titulaire: Autovib, 25480 Miserey Salines (FR)
(72) Inventeur: BARTOLI, Frédéric, 38960 SAINT ETIENNE DE CROSSEY (FR)
(74) Mandataire: IP Trust

(56) Documents cités:
- WO-A1-00/26739
- US-A- 4 178 525
- US-A1- 2010 244 813
- US-A1- 2011 282 467

## Description

### DOMAINE DE L'INVENTION

La présente invention concerne un dispositif de mesure présentant une interface « deux fils », par exemple du type IEPE.

### ARRIERE PLAN TECHNOLOGIQUE DE L'INVENTION

On connaît des dispositifs de mesure, tels que les accéléromètres piézo-électriques, présentant une interface dite « à deux fils », reliés à un équipement de mesures distant par l'intermédiaire d'une simple paire de fils conducteurs (désignée plus simplement par « paire conductrice » dans la suite de cette description).

La paire conductrice permet d'alimenter électriquement le dispositif de mesure et de véhiculer en retour une grandeur électrique représentative de la grandeur mesurée. L'un des fils de la paire conductrice peut porter une masse et l'autre la tension utile, représentative de la grandeur mesurée.

Selon cette approche, souvent désigné par l'acronyme IEPE (de l'expression anglo-saxonne « Integrated Electronic PiezoElectric »), le dispositif de mesure est alimenté à courant constant et il module la tension présente sur la paire conductrice pour véhiculer et transmettre la mesure à l'équipement distant.

La source de courant constant de haute impédance est intégrée à l'équipement de mesure et fournit une intensité de l'ordre de quelques milliampères, typiquement comprise entre 2 et 20 milliampères. Cette source est capable de tenir une tension dans une plage allant, dans certains dispositifs connus, de 0V jusqu'à 24 V. Le point de repos en sortie du dispositif de mesure est fixé au milieu de cette plage, ce qui permet en principe une dynamique de mesure de +/-12 V.

La simplicité de mise en œuvre d'un tel dispositif de mesure et son immunité au bruit a conduit à la généralisation de son usage dans les environnements industriels.

Les dispositifs de mesure modernes comprennent, outre le transducteur permettant de fournir une mesure brute de la grandeur physique dont on souhaite acquérir une mesure, un étage de traitement de cette mesure brute pour la conditionner, par exemple pour la filtrer et/ou l'amplifier. Cet étage de traitement peut nécessiter d'être alimenté électriquement, le plus souvent par l'intermédiaire d'une tension fixe à basse impédance. Certains transducteurs peuvent également nécessiter une telle alimentation, comme cela peut être le cas des accéléromètres réalisés à base de MEMS.

Cette alimentation (à tension constante et à basse impédance) n'est pas directement compatible avec celle fournie par l'interface deux fils. Il est donc nécessaire d'inclure dans le dispositif de mesure, un circuit d'alimentation auxiliaire (également désigné comme « régulateur » dans la présente demande) pour permettre d'assurer cette fonction d'alimentation.

On connaît ainsi du document US8179121 un dispositif de mesure comprenant un transducteur MEMS, un étage d'amplification et de filtrage, et une interface deux fils du type IEPE. Entre les bornes de connexion de l'interface deux fils, une diode Zener est disposée en série avec un étage d'amplification, et forme un régulateur fournissant une tension constante de 5V exploitée pour alimenter le transducteur et l'étage d'amplification et de filtrage.

Dans la configuration proposée par ce document, la tension constante se développant aux bornes de la diode est une composante directe du signal fourni au niveau de l'interface deux fils. Ce montage limite donc l'excursion en tension pouvant avoir lieu entre les bornes de cette interface. Les perturbations induites sur le signal de sortie du dispositif de mesure, par exemple issues de l'écart existant nécessairement entre les caractéristiques de la diode et ses caractéristiques spécifiées, ne peuvent pas être corrigées directement par une boucle de rétroaction dans l'architecture proposée.

### OBJET DE L'INVENTION

La présente invention vise à fournir un dispositif de mesure comportant une interface à deux fils et présentant une architecture différente, remédiant au moins en partie aux problèmes de l'architecture des solutions de l'état de la technique.

### BREVE DESCRIPTION DE L'INVENTION

En vue de la réalisation de l'un de ces buts, l'objet de l'invention propose un dispositif électronique de mesure d'une grandeur déterminée, le dispositif présentant une interface deux fils présentant deux bornes de connexion destinées à être reliées à une paire conductrice alimentant le dispositif de mesure et véhiculant en retour une grandeur électrique représentative de la grandeur mesurée.

Le dispositif comprend un transducteur fournissant une mesure brute de la grandeur déterminée, un étage de traitement pour conditionner la mesure brute, l'étage de traitement comprenant une entrée reliée au transducteur et un port de sortie sortie et un régulateur comprenant un port d'entrée électriquement relié aux deux bornes de connexion de l'interface deux fils et un port de sortie alimentant en tension régulée le transducteur et/ou l'étage de traitement.

Le dispositif est remarquable en ce que le port de sortie de l'étage de traitement est relié au port d'entrée ou au port de sortie du régulateur et en ce que le dispositif comprend un circuit de rétroaction électriquement relié au port d'entrée du régulateur et à l'étage de traitement.

La boucle de rétroaction englobant le régulateur, on peut compenser de manière robuste l'influence possible de cet élément.

Selon d'autres caractéristiques avantageuses et non limitatives de l'invention, prises seules ou selon toute combinaison techniquement réalisable :
- l'étage de traitement comprend un bloc de filtrage et un bloc d'amplification ;
- le régulateur est un régulateur série ;
- le régulateur série comprend un dispositif de stockage d'énergie ;
- le régulateur est un régulateur élévateur de tension, tel qu'un régulateur à découpage ;
- le dispositif électronique de mesure est configuré pour être alimenté à courant constant, la grandeur électrique véhiculée en retour étant une tension ;
- le transducteur est un accéléromètre ;
- l'accéléromètre est un accéléromètre piézoélectrique ;
- l'accéléromètre est un accéléromètre MEMS.

### BREVE DESCRIPTION DES DESSINS

D'autres caractéristiques et avantages de l'invention ressortiront de la description détaillée de l'invention qui va suivre en référence aux figures annexées sur lesquels :
- La figure 1 représente un système de mesure mettant en œuvre un dispositif électronique de mesure ;
- la figure 2 représente un schéma de principe du dispositif électronique de mesure ;
- les figures 3a à 3d représentent respectivement et schématiquement un régulateur série non asservi, un régulateur série asservi, un régulateur à diode Zener et un régulateur à découpage ;
- les figures 4a et 4b représentent deux configurations possibles du dispositif de mesure ;
- les figures 5a et 5b représentent respectivement un premier et un deuxième exemple d'un dispositif de mesure selon la configuration de la figure 4a ;
- les figures 6a et 6b représentent respectivement un premier et un deuxième exemple d'un dispositif de mesure selon la configuration de la figure 4b ;
- la figure 6c représente une variante du premier exemple de la figure 6a.

### DESCRIPTION DETAILLEE DE L'INVENTION

Par souci de simplification de la description à venir, les mêmes références sont utilisées pour des éléments identiques ou assurant la même fonction dans les différents modes de mise en œuvre exposés du procédé.

On désignera par « port » d'un circuit électronique, un couple d'éléments conducteurs du circuit le reliant électriquement à un autre. Les courants circulant dans ces éléments conducteurs sont égaux et de sens opposés. L'un des éléments conducteurs est généralement relié à une masse, et l'autre porte une tension « utile ». La tension du port correspond à la tension se développant entre ces deux éléments. Elle est égale à la tension utile portée par un des éléments lorsque l'autre est relié à une masse électrique. Un circuit peut présenter un port dit « d'entrée » et un port dit « de sortie » sans que ces désignations, permettant de distinguer un port de l'autre, n'imposent un sens de fonctionnement quelconque au circuit.

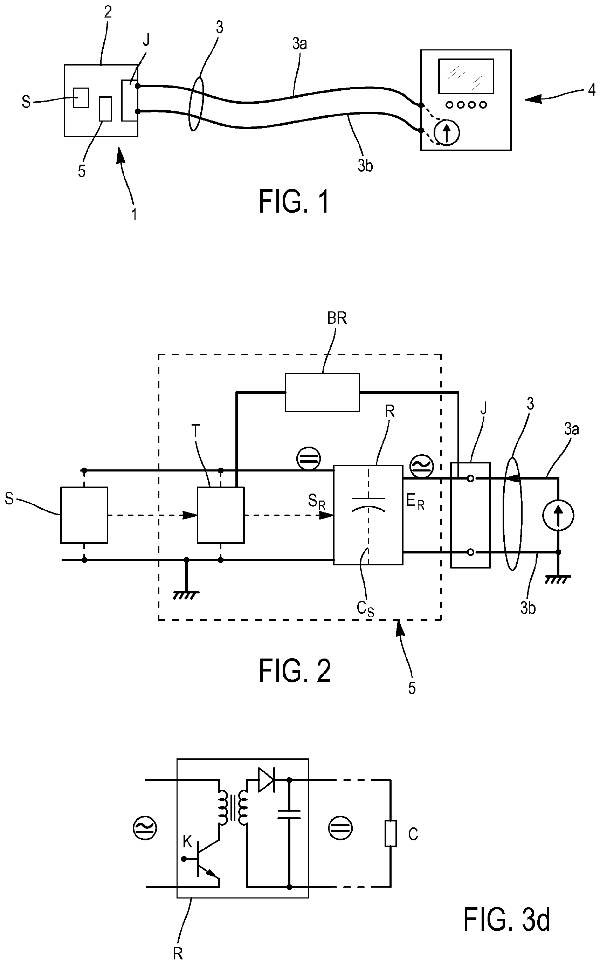

On a représenté sur la figure 1 un système de mesure mettant en œuvre un dispositif électronique de mesure 1 conforme à la présente description.

Le dispositif électronique de mesure 1 comprend au moins un transducteur S pour mesurer une grandeur déterminée. Il peut ainsi s'agir d'un accéléromètre permettant de procéder à l'acquisition des caractéristiques vibratoires d'une machine ou d'un équipement auquel le dispositif 1 est solidaire. L'accéléromètre peut mettre en œuvre une technologie de mesure fondée sur l'exploitation d'un effet piézo-électrique, capacitif ou de tout autre effet physique. Il peut être réalisé par une technologie d'intégration microélectronique et se présenter par exemple sous la forme d'un système micro électromécanique (MEMS).

Dans un exemple particulier de mise en œuvre, le transducteur est un accéléromètre MEMS monoaxial, biaxial ou triaxial, c'est à dire fournissant une mesure d'accélération selon une, deux ou trois directions. Lorsqu'une pluralité de mesures est disponible, ces mesures peuvent être électriquement combinées entre elles pour que le dispositif de mesure puisse fournir une mesure combinée de l'accélération. La (ou les) direction de mesure du MEMS peut être disposée à 45° de l'axe de mesure du transducteur.

Les différentes formes que peut prendre l'accéléromètre, ou plus généralement le transducteur S, peuvent lui conférer des caractéristiques particulières comme la capacité de mesurer des grandeurs évoluant selon une gamme de fréquences relativement haute ou basse, ou encore la nécessité d'être alimenté en énergie, ou de pouvoir fonctionner de manière autonome en énergie, etc.

Le dispositif électronique de mesure 1 de la présente description n'est toutefois pas limité à une forme particulière de transducteur, et tout transducteur S fournissant une mesure brute d'une grandeur à mesurer peut convenir. Cette mesure brute peut se matérialiser comme une tension, une charge, un courant, une résistance, et plus généralement comme toute grandeur électrique qui puisse être conditionnée par le dispositif électronique de mesure 1, comme cela sera détaillé dans la suite de cet exposé. A titre d'exemples complémentaires, le transducteur S peut former un capteur de pression, de température, un microphone, un capteur optique.

Revenant à la description de la figure 1, le dispositif électronique de mesure 1 comprend un boîtier 2 dans lequel les différents éléments composant le dispositif sont disposés. On pourrait toutefois prévoir, sans sortir du cadre de la présente invention, que les éléments du dispositif de mesure 1 ne soient pas disposés dans un même boîtier, voire même qu'aucun boîtier ne soit prévu.

Dans l'exemple représenté sur la figure 1, outre le transducteur S, le dispositif de mesure 1 comprend une interface deux fils J comprenant deux bornes de connexion et permettant de relier deux fils conducteurs 3a, 3b au dispositif électronique de mesure 1. La paire de fils 3a, 3b sera désignée par l'expression « paire conductrice 3 » dans la suite de cet exposé. L'interface deux fils J forme un port de sortie du dispositif de mesure 1, la tension se développant sur ce port étant représentative de la grandeur mesurée. L'un des fils 3a, 3b de la paire conductrice porte une masse électrique et l'autre la tension utile.

L'interface deux fils J peut prendre toute forme adaptée permettant de relier la paire conductrice 3 électriquement au dispositif 1 et, éventuellement, mécaniquement au boîtier 2. Dans un exemple particulier de mise en œuvre, la paire conductrice 3 est constituée d'un câble coaxial formé, comme cela est bien connu en soi, d'un fil conducteur central pour conduire la tension utile, d'un matériau diélectrique enrobant le fil conducteur central et d'une gaine conductrice extérieure formant le deuxième fil de la paire 3 et associée à la masse du système. On isole ainsi électro magnétiquement le signal circulant dans le fil conducteur central, ce qui permet de rendre robuste la mesure aux perturbations électromagnétiques qui peuvent être intenses dans un environnement industriel. L'interface deux fils J est constituée dans ce cas d'un connecteur coaxial mâle ou femelle. Alternativement, la paire conductrice 3 peut être formée des deux fils 3a, 3b encapsulés dans une gaine blindée. Dans ce cas l'interface deux fils J peut relier électriquement la gaine à la masse du boitier 2, et relier la masse électrique du dispositif 1 à l'un des deux fils de la paire conductrice 3.

Le système de mesure représenté sur la figure 1 comprend également un équipement de mesure 4. L'équipement de mesure 4 est relié au dispositif électronique de mesure 1 par l'intermédiaire de la paire conductrice 3. L'équipement de mesure 4 de la figure 1 a une double fonction. Il procède à l'acquisition des mesures fournies par le dispositif de mesure 1 pour les visualiser, les enregistrer, ou en faire l'analyse. Il constitue également une source d'énergie permettant d'alimenter électriquement le dispositif de mesure 1.

Plus spécifiquement, l'équipement de mesure 4 comprend une source de courant reliée à la paire conductrice 3, cette dernière alimentant à courant constant le dispositif de mesure 1. Dans le même temps, la mesure établie par le dispositif électronique de mesure 1 sur son port de sortie est véhiculée en retour par la paire conductrice 3 à l'équipement de mesure 4 pour y être traitée.

Comme on l'a énoncé en introduction de la présente demande, un tel mode d'opération du dispositif de mesure 1 est connu sous l'acronyme IEPE lorsque le transducteur est un accéléromètre piézoélectrique. Et dans ce cas, la source de courant fourni typiquement une intensité à haute impédance de quelques milliampères (entre 2 et 20 milliampères). La tension se développant entre les deux fils de la paire conductrice 3 est typiquement comprise entre 0V et 24 V. On peut bien entendu prévoir que la source de courant ne soit pas intégrée dans l'équipement de mesure 4 mais forme un élément séparé du système.

Revenant à la description générale du dispositif de mesure 1 de la figure 1, celui-ci comprend entre le transducteur S fournissant la mesure brute de la grandeur déterminée et l'interface deux fils J, une portion électronique 5. Cette portion, électriquement reliée au transducteur S et à l'interface J, comprend une pluralité de composants électroniques discrets ou intégrés (tels que des résistances, capacités, inductances, transistors, amplificateurs, etc.) disposés sur une ou une pluralité de cartes électroniques de type PCB.

On a représenté sur la figure 2 un schéma de principe du dispositif électronique de mesure 1. Sur cette figure, la paire conductrice 3 reliée à une source de courant est électriquement connectée à l'interface deux fils J.

Une première partie des composants électroniques de la portion électronique 5 constitue un étage de traitement T visant à conditionner la mesure brute fournie par le transducteur S. Cet étage comprend donc une entrée reliée au transducteur S et un port de sortie fournissant un signal électrique conditionné. Ce port de sortie peut être électriquement relié aux ports d'entrée ou de sortie d'un régulateur R, comme cela sera exposé plus en détail dans la suite de cette description. Dans tous les cas, le signal électrique conditionné fourni par le port de sortie de l'étage de traitement T module la tension du port de sortie du dispositif de mesure 1, pour véhiculer sur la paire conductrice 3 une tension électrique représentative de la grandeur mesurée.

Le conditionnement de la mesure brute réalisé par cet étage de traitement T peut comprendre l'amplification des charges ou de la tension fournie par le transducteur S et/ou son filtrage par exemple par l'intermédiaire d'un filtre de Butterworth, de Bessel, de Chebyshev, ou de tout autre type. Le conditionnement peut être de tout autre nature, comme pour par exemple fournir une valeur efficace de la mesure brute ou même comporter un traitement numérique de cette mesure.

Ce conditionnement est assisté d'une boucle de contre réaction BR permettant d'injecter dans l'étage de traitement T la tension de sortie du dispositif de mesure 1. Cette boucle peut comprendre tout type de composants passifs ou actifs. Elle peut permettre de fixer ou stabiliser le gain et/ou la tension de repos du dispositif de mesure 1, comme cela est bien connu en soi.

Une autre partie des composants électroniques de la portion 5 du dispositif 1 forme un régulateur R pour alimenter en tension l'étage de traitement T et/ou le transducteur S. Ce régulateur R comprend un port d'entrée Er électriquement relié aux deux bornes de connexion de l'interface deux fils J, sur lequel s'applique donc une tension variable. Il comprend également un port de sortie Sr alimentant en tension régulée le transducteur S et/ou l'étage de traitement T.

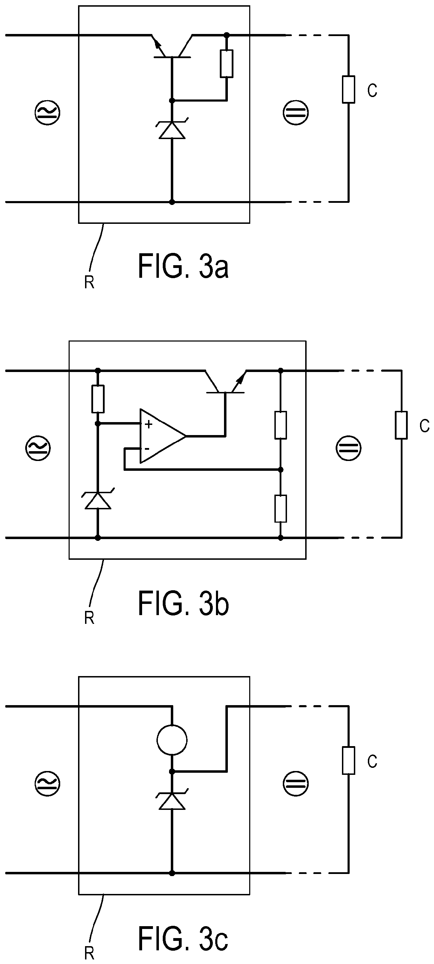

Un régulateur R deux ports compatible avec un dispositif de mesure 1 peut être réalisé sous de multiples formes. A titre d'exemple, il peut s'agir d'un régulateur série, placé donc on série entre une charge C, ici l'étage de traitement T et/ou le transducteur S, et une tension variable, ici la tension portée par la paire conductrice 3. Un tel circuit provoque une chute de tension entre son port d'entrée et son port de sortie, quelle que soit la tension présente sur ce port d'entrée supérieure à la tension de sortie, de manière à maintenir constante la tension délivrée sur le port de sortie. Le courant absorbé par le port d'entrée est restitué sur le port de sortie. Un tel régulateur série est représenté schématiquement sur la figure 3a dans une configuration en boucle ouverte, et sur la figure 3b dans une configuration comprenant un asservissement de la tension régulée.

A titre d'exemple complémentaire, il peut s'agir d'un régulateur à diode Zener, éventuellement complétée d'une source de courant (résistance, transistor), comme cela est schématisé par le circuit de la figure 3c.

Dans ces deux exemples, la dynamique de sortie du dispositif de mesure 1, c'est-à-dire l'excursion possible en tension entre une tension minimale et une tension maximale, est limitée. Il est en effet nécessaire pour que le dispositif soit fonctionnel que la tension présente sur le port de sortie du dispositif de mesure 1, qui correspond également à la tension présente sur le port d'entrée Er du régulateur R, reste supérieure à la tension d'alimentation des autres éléments du dispositif 1 augmentée d'une tension de déchet nécessaire au fonctionnement de régulateur R lui-même. Ainsi, pour alimenter les composants du dispositif de mesure 1 à l'aide d'une tension régulée de 5V, la tension sur le port d'entré Er du régulateur R, et donc la tension sur le port de sortie du dispositif de mesure 1, ne peut descendre sous une valeur minimale d'environ 6V ou 7 V.

Pour parer à cela, on peut prévoir de munir le régulateur R d'un dispositif de stockage d'énergie Cs, par exemple une capacité. Le dispositif de stockage permet de stocker de l'énergie lorsque la tension sur le port d'entrée Er du régulateur R est supérieure à la tension seuil minimal, et restituer cette énergie et permettre de maintenir la tension régulée lorsque la tension sur le port d'entré est supérieure à cette tension seuil. Le dimensionnement de ce dispositif de stockage (par exemple de la capacité) et bien entendu dépendant des caractéristiques de la grandeur mesurée. Cette solution est notamment bien adaptée aux grandeurs n'évoluant pas en basse fréquence, inférieure à 1 Hz ou 10hz, et donc peu susceptibles de présenter une tension inférieure à la tension seuil pendant une période de temps étendue.

Dans une alternative, le régulateur R peut être constitué d'un régulateur à découpage pouvant fonctionner en élévateur de tension, représenté schématiquement sur la figure 3d. Cette alternative est particulièrement adaptée à la mesure de grandeurs quasi statique, comme par exemple la mesure de la pression atmosphérique. La mesure d'une telle grandeur est susceptible de fournir, sur le port de sortie du dispositif 1, une tension inférieure à la tension seuil d'un régulateur série pour des périodes de temps très étendue. Cette tension relativement faible ne peut donc être facilement compensée par un dispositif de stockage présentant une dimension compatible avec celle du dispositif de mesure 1. A titre d'exemple, à l'aide d'un régulateur élévateur de tension, tel qu'un régulateur à découpage, une tension de 3V présente sur la paire conductrice 3 peut être transformée en une tension de 5 V sur le port de sortie Es du régulateur R permettant ainsi d'alimenter les éléments actifs de dispositif 1. Dans ce cas, on peut prévoir un circuit complémentaire, alimenté par le régulateur R lui-même, pour fournir le signal de découpage K.

Un régulateur élévateur de tension peut également être mise en œuvre par un dispositif à capacités commutées.

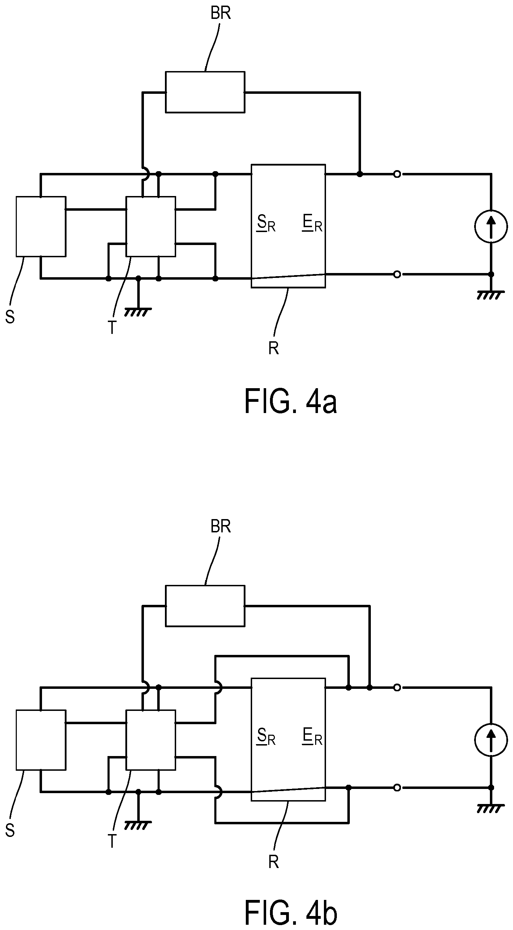

Quelle que soit la nature choisie du régulateur R et de l'étage de traitement T, ces deux éléments de la portion électronique 5 du dispositif de mesure 1 peuvent être reliés l'un à l'autre selon deux configurations schématiquement représentées sur les figures 4a et 4b.

Dans la première configuration de la figure 4a, le port de sortie de l'étage de traitement T est électriquement relié au port de sortie Sr du régulateur R. Dans la seconde configuration de la figure 4b, le port de sortie de l'étage de traitement T est électriquement relié au port d'entrée Er du régulateur R. Dans les deux cas, le signal conditionné de la mesure disponible sur le port de sortie de l'étage de traitement T module la tension de la paire conductrice 3 pour qu'elle soit représentative de la grandeur mesurée par le transducteur S.

Bien entendu, la portion électronique 5 du dispositif de mesure 1 peut comporter d'autres composants électroniques visant à remplir d'autres fonctions ou à compléter les fonctions de traitement de la mesure brut et de fourniture d'une tension d'alimentation régulée. On peut ainsi prévoir des capacités ayant des fonctions de découplage ou des résistances disposées en pont diviseur pour fixer la tension de repos sur la paire conductrice 3, si cette fonction n'est pas incluse dans la boucle de contre réaction BR.

En fonctionnement, le dispositif électronique de mesure 1 est donc relié par l'intermédiaire de la paire conductrice 3 à une source de courant, qui peut être placée dans l'équipement de mesure 4. Cette source fournit un courant nominal, par exemple de quelques milliampères, et est capable de tenir une plage de tension définissant la dynamique de la mesure. Cette dynamique peut être par exemple comprise entre 0 et 24 volts.

La boucle de rétroaction BR ou des composants électroniques additionnels de la portion électronique 5, définissent la tension de repos fournie à la paire conductrice 3 par le dispositif 1. Par « tension de repos », on désigne la tension présente sur la paire conductrice 3 lorsque la grandeur déterminée présente une valeur de référence. À titre d'exemple, lorsque le transducteur est un capteur de pression atmosphérique, la valeur de référence peut être une pression de 1 atm. Lorsque le transducteur S est un accéléromètre, la valeur de référence peut être une accélération nulle. D'une manière générale, la tension de repos est choisie pour être supérieure à la tension régulée de l'alimentation du transducteur S et/ou de l'étage de traitement T, en prenant en compte la tension de déchet du régulateur R lui-même. Si le régulateur a la faculté de stocker de l'énergie ou de fonctionner en élévateur de tension, la tension de repos peut être choisie plus librement, typiquement au point milieu de la dynamique.

Lorsque la grandeur mesurée est à sa valeur de référence, la tension de repos s'établit dans la paire conductrice 3, au niveau de l'interface deux fils J et du port d'entrée Er du régulateur R. Le régulateur fournit sur son port de sortie Sr la tension régulée d'alimentation à l'étage de traitement T et/ou au transducteur S qui sont donc bien fonctionnels.

Les variations de la grandeur mesurée conduisent à faire varier la mesure brute fournie par le transducteur S. La mesure brute est fournie à l'entrée de l'étage de traitement T pour la filtrer et/ou l'amplifier. Le port de sortie de l'étage de traitement T est relié au port d'entrée Er ou au port de sortie Sr du régulateur R pour, dans tous les cas, moduler la tension présente sur la paire conductrice 3 et la rendre représentative de la grandeur mesurée.

Avantageusement, on choisira le gain d'amplification de l'étage de traitement T pour profiter de toute la dynamique possible de tension. Par exemple, dans le cas où le transducteur S est un accéléromètre, on pourra ajuster le gain de l'étage de traitement T pour obtenir une sensibilité de mesure égale ou supérieure à 100 mV/g ou à 500 mV/g, où g est une unité d'accélération correspondant approximativement à l'accélération de la pesanteur à la surface de la Terre. Pour une dynamique comprise entre 0V et 24V, une tension de repos fixée à 12 V et un seuil limite de 7V permettant de réguler la tension d'alimentation de 5V volts, on dispose d'une dynamique de mesure de 50g pour une sensibilité de 100 mV/g ou de 10g pour une sensibilité de 500 mV/g. Dans un dispositif pouvant exploiter toute la dynamique entre 0V et 24V, une tension de repos fixée à 12V, on dispose d'une dynamique de 100g pour une sensibilité de 100mV/g.

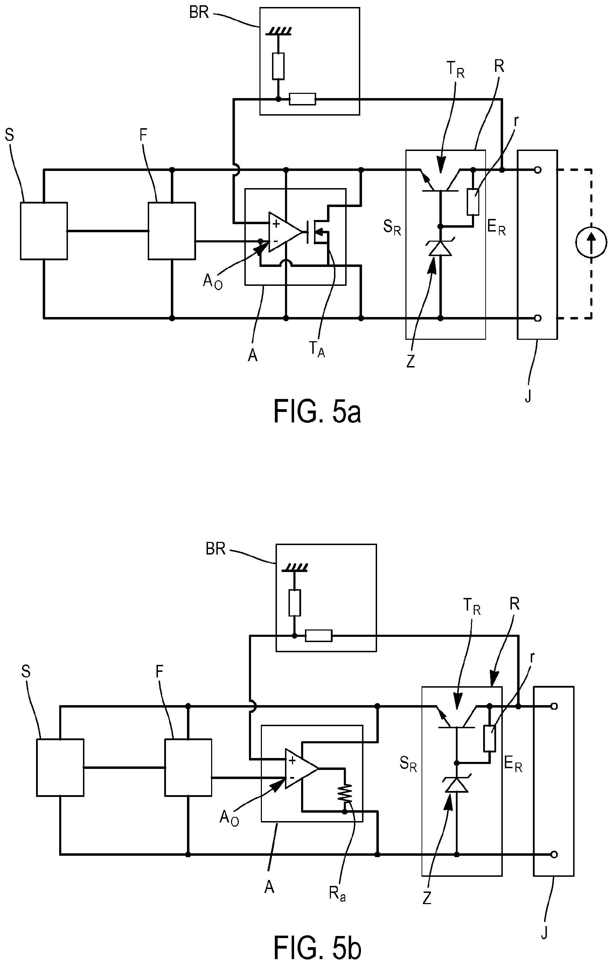

En référence à la figure 5a on présente maintenant un premier exemple d'un dispositif électronique de mesure 1 conforme au premier mode de mise en œuvre de la figure 4a.

Dans cet exemple, on retrouve bien le transducteur S et l'interface deux fils J. Le transducteur peut être un accéléromètre MEMS alimenté par une tension de 5V. L'étage de traitement T est ici composé d'un premier bloc F de filtrage de la mesure brute et d'un second bloc A d'amplification, électriquement relié l'un à l'autre en série. Le régulateur R est ici composé d'un régulateur série, comprenant un transistor Tr disposé entre un élément conducteur du port d'entrée Er et un élément conducteur du port de sortie Sr, et d'une diode Zener Z (dont les caractéristiques déterminent essentiellement la tension régulée sur le port de sortie Sr du régulateur R) placée dans la base du transistor Tr et reliée à la masse électrique du circuit. Cette masse électrique est également reliée au deuxième élément conducteur du port d'entrée Er et du port de sortie Sr du régulateur R. Une résistance r est disposée entre une borne du transistor Tr et sa base. On dispose donc sur le port de sortie Sr d'une tension régulée, par exemple de 5V, qui est distribuée sur les broches d'alimentation du transducteur S et de l'étage le traitement T composé du bloc de filtrage F et du bloc d'amplification A.

Le bloc d'amplification A comprend un amplificateur opérationnel Ao alimenté à partir de la tension fournie par le régulateur R. Cet amplificateur opérationnel reçoit sur une première entrée différentielle la mesure brute issue du bloc de filtrage F et, sur une seconde entrée différentielle, une tension fournie par la boucle de contre réaction BR. La sortie de l'amplificateur opérationnel Ao est connectée à un transistor Ta disposé entre les deux éléments conducteurs formant le port de sortie du bloc d'amplification A. Ce port est relié au port de sortie Sr du régulateur R.

La boucle de rétroaction est réalisée ici par de simple résistances, configurés en pont diviseurs.

Lorsqu'un écart est présent sur l'entrée différentielle de l'amplificateur Ao, le transistor Ta absorbe un courant sur le port de sortie Sr du régulateur R. Celui compense, conjointement avec l'effet de rétroaction de la boucle BR, le courant absorbé en ajustant la tension présente sur son port d'entrée Er. On module de la sorte la tension entre les bornes de l'interface deux fils J et véhiculée sur la paire conductrice 3, selon la mesure brute fournie par le transducteur S.

La figure 5b représente un deuxième exemple d'un dispositif électronique de mesure 1 conforme au premier mode de mise en œuvre de la figure 4a. Dans ce second exemple, seul le bloc d'amplification A est modifié par rapport à l'exemple précédent. La description des autres blocs ou éléments du dispositif de ce second exemple est donc omise par souci de concision.

Dans ce deuxième exemple, le bloc d'amplification A est remarquable en ce que son port de sortie, relié au port de sortie Sr du régulateur R, est également relié aux broches d'alimentation de l'amplificateur opérationnel Ao. Lorsqu'un écart est présent sur les entrées différentielles de l'amplificateur opérationnel Ao, la sortie de l'amplificateur se décharge dans une résistance Ra conduisant à augmenter le courant d'alimentation de cet amplificateur. De la sorte, on consomme le courant présente sur le port de sortie Sr du régulateur R, qui compense similairement à ce qui a été décrit en relation avec la description de la figure 5a.

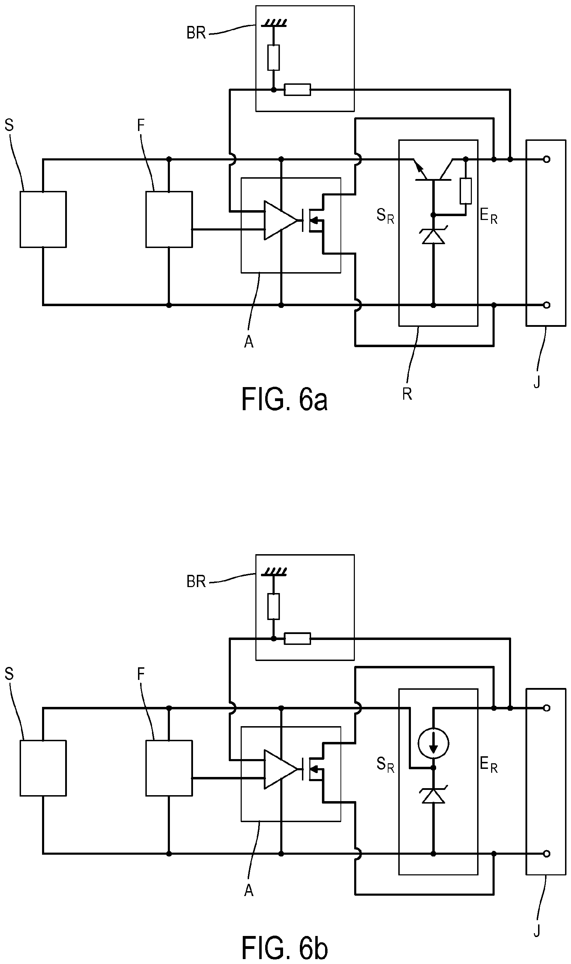

La figure 6a représente un premier exemple d'un dispositif de mesure 1 conforme au deuxième mode de mise en œuvre de la figure 4b. On retrouve bien dans cet exemple le transducteur S, bloc de filtrage F, le régulateur R série, et l'interface deux fils J des deux exemples précédents. Dans cet exemple, le port de sortie du bloc d'amplification A est relié au port d'entrée Er du régulateur R. Le bloc d'amplification est identique à celui de la figure 5a. En fonctionnement, avec un écart présent sur les entrées différentielles de l'amplificateur opérationnel dérive une partie du courant à l'entrée Er du régulateur, ce qui conduit à moduler cette tension.

La figure 6b représente un deuxième exemple d'un dispositif de mesure 1 conforme au deuxième de mise en œuvre de la figure 4b. Dans ce deuxième exemple, on a remplacé le régulateur série R des exemples précédents par un régulateur alternatif. Celui-ci est composé d'une diode Zener Z disposée en série avec une source de courant (une résistance par exemple). Le port de sortie Sr prélève la tension du point milieu défini aux bornes de la diode 2. Le mode de fonctionnement du dispositif 1 de cet exemple est similaire à celui de la figure 6a.

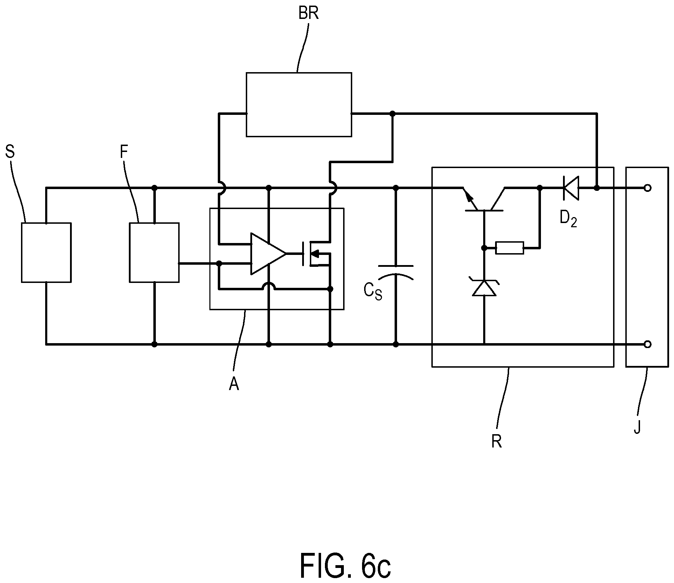

La figure 6c représente une variante du premier exemple du deuxième mode de réalisation exposé en relation avec la description de la figure 6a. Dans cette variante, on a prévu un dispositif de stockage Cs, ici une capacité dont la valeur peut être typiquement comprise entre 10 et 50 microFarad lorsque le transducteur est un accéléromètre MEMS alimenté par une tension de 5V. On a également prévu une diode D2 anti-retour de manière à éviter de décharger le dispositif de stockage à travers le régulateur R et l'étage de sortie de l'amplificateur A.

Bien entendu l'invention n'est pas limitée aux modes de mise en œuvre décrits et on peut y apporter des variantes de réalisation sans sortir du cadre de l'invention tel que défini par les revendications.

Ainsi, bien que le dispositif de mesure ait été présenté pour être alimenté à courant constant, la tension étant modulée pour véhiculer sur la paire conductrice 3 une tension représentative de la grandeur mesurée, on pourrait appliquer les mêmes principes que ceux exposés pour fournir un dispositif alimenté à tension constante, et qui modulerait le courant circulant dans la paire conductrice pour véhiculer la grandeur mesurée.

Par ailleurs, le dispositif peut comporter une pluralité de transducteurs, alimentés par le régulateur. Dans ce cas, les mesures fournies par ces transducteurs peuvent être combinées entre elles, par exemple pour fournir une valeur moyenne, avant d'être véhiculé sur la paire conductrice.

## Revendications

1. Dispositif électronique de mesure (1) d'une grandeur déterminée, le dispositif présentant une interface deux fils (J) présentant deux bornes de connexion destinées à être reliées à une paire conductrice (3) alimentant le dispositif de mesure et véhiculant en retour une grandeur électrique représentative de la grandeur mesurée, le dispositif comprenant :
- un transducteur (S) fournissant une mesure brute de la grandeur déterminée ;
- un étage de traitement (T) pour conditionner la mesure brute, l'étage de traitement comprenant une entrée reliée au transducteur et un port de sortie ;
- un régulateur (R) comprenant un port d'entrée (Er) électriquement relié aux deux bornes de connexion de l'interface deux fils et un port de sortie (Sr) alimentant en tension régulée le transducteur (S) et/ou l'étage de traitement (T),
le dispositif étant **caractérisé en ce que** le port de sortie de l'étage de traitement (T) est relié au port d'entrée (Er) ou au port de sortie (Sr) du régulateur (R) et **en ce que** le dispositif comprend un circuit de rétroaction (BR) électriquement relié au port d'entrée (Er) du régulateur (R) et à l'étage de traitement (T).

2. Dispositif électronique de mesure (1) selon la revendication précédente dans lequel l'étage de traitement (T) comprend un bloc de filtrage (F) et un bloc d'amplification (A).

3. Dispositif électronique de mesure (1) selon l'une des revendications précédentes dans lequel le régulateur (R) est un régulateur série.

4. Dispositif électronique de mesure (1) selon la revendication précédente dans lequel le régulateur série (R) comprend un dispositif de stockage d'énergie.

5. Dispositif électronique de mesure (1) selon l'une des revendications 1 et 2, dans lequel le régulateur (R) est un régulateur élévateur de tension.

6. Dispositif électronique de mesure (1) selon la revendication précédente dans lequel le régulateur élévateur de tension (R) est un régulateur à découpage.

7. Dispositif électronique de mesure (1) selon l'une des revendications précédentes configuré pour être alimenté à courant constant, la grandeur électrique véhiculée en retour étant une tension.

8. Dispositif électronique de mesure (1) selon l'une des revendications précédentes dans lequel le transducteur est un accéléromètre.

9. Dispositif électronique de mesure (1) selon la revendication précédente dans lequel l'accéléromètre est un accéléromètre piézoélectrique.

10. Dispositif électronique de mesure (1) selon la revendication 8 dans lequel l'accéléromètre est un accéléromètre MEMS.

## Patentansprüche

1. Elektronische Messvorrichtung (1) für eine bestimmte Größe, wobei die Vorrichtung eine Zweidrahtschnittstelle (J) mit zwei Anschlussklemmen zum Verbinden mit einem Leiterpaar (3) aufweist, das die Messvorrichtung mit Strom versorgt und in Gegenrichtung eine elektrische Größe überträgt, die für die Messgröße repräsentativ ist, die Vorrichtung umfassend:
- einen Wandler (S), der eine Rohmessung der bestimmten Größe bereitstellt;
- eine Verarbeitungsstufe (T) zum Konditionieren der Rohmessung, wobei die Verarbeitungsstufe einen mit dem Wandler verbundenen Eingang und einen Ausgangsanschluss umfasst;
- einen Regler (R), der einen elektrisch mit den beiden Anschlussklemmen der Zweidrahtschnittstelle verbundenen Eingangsanschluss (Er) und einen den Wandler (S) und/oder die Verarbeitungsstufe (T) mit geregelter Spannung versorgenden Ausgangsanschluss (Sr) umfasst,
wobei die Vorrichtung **dadurch gekennzeichnet ist, dass** der Ausgangsanschluss der Verarbeitungsstufe (T) mit dem Eingangsanschluss (Er) oder mit dem Ausgangsanschluss (Sr) des Reglers (R) verbunden ist und dass die Vorrichtung eine Rückkopplungsschaltung (BR) umfasst, die elektrisch mit dem Eingangsanschluss (Er) des Reglers (R) und der Verarbeitungsstufe (T) verbunden ist.

2. Elektronische Messvorrichtung (1) nach dem vorhergehenden Anspruch, wobei die Verarbeitungsstufe (T) eine Filtereinheit (F) und eine Verstärkungseinheit (A) umfasst.

3. Elektronische Messvorrichtung (1) nach einem der vorhergehenden Ansprüche, wobei der Regler (R) ein Serienregler ist.

4. Elektronische Messvorrichtung (1) nach dem vorhergehenden Anspruch, wobei der Serienregler (R) eine Energiespeichervorrichtung umfasst.

5. Elektronische Messvorrichtung (1) nach einem der Ansprüche 1 und 2, wobei der Regler (R) ein Aufwärtsregler der Spannung ist.

6. Elektronische Messvorrichtung (1) nach dem vorhergehenden Anspruch, wobei der Aufwärtsregler der Spannung (R) ein Schaltregler ist.

7. Elektronische Messvorrichtung (1) nach einem der vorhergehenden Ansprüche, die eingerichtet ist, mit Konstantstrom versorgt zu werden, wobei die übertragene elektrische Größe eine Spannung ist.

8. Elektronische Messvorrichtung (1) nach einem der vorhergehenden Ansprüche, wobei der Wandler ein Beschleunigungsmesser ist.

9. Elektronische Messvorrichtung (1) nach dem vorhergehenden Anspruch, wobei der Beschleunigungsmesser ein piezoelektrischer Beschleunigungsmesser ist.

10. Elektronische Messvorrichtung (1) nach Anspruch 8, wobei der Beschleunigungsmesser ein MEMS-Beschleunigungsmesser ist.

## Claims

1. Electronic device (1) for measuring a determined quantity, the device having a two-wire interface (J) having two connection terminals intended to be connected to a conductive pair (3) supplying the measuring device and conveying in return an electrical quantity representative of the measured quantity, the device comprising:
- a transducer (S) providing a raw measurement of the determined quantity;
- a processing stage (T) for conditioning the raw measurement, the processing stage comprising an input connected to the transducer and an output port;
- a regulator (R) comprising an input port (Er) electrically connected to the two connection terminals of the two-wire interface and an output port (Sr) supplying the transducer (S) and/or the processing stage (T) with regulated voltage,
the device being **characterized in that** the output port of the processing stage (T) is connected to the input port (Er) or to the output port (Sr) of the regulator (R) and **in that** the device comprises a feedback circuit (BR) electrically connected to the input port (Er) of the regulator (R) and to the processing stage (T).

2. Electronic measuring device (1) according to the preceding claim, wherein the processing stage (T) comprises a filter block (F) and an amplification block (A).

3. Electronic measuring device (1) according to either of the preceding claims, wherein the regulator (R) is a series regulator.

4. Electronic measuring device (1) according to the preceding claim, wherein the series regulator (R) comprises an energy storage device.

5. Electronic measuring device (1) according to either claim 1 or 2, wherein the regulator (R) is a step-up voltage regulator.

6. Electronic measuring device (1) according to the preceding claim, wherein the step-up voltage regulator (R) is a switching regulator.

7. Electronic measuring device (1) according to any of the preceding claims, the device configured to be supplied with constant current, the electrical quantity conveyed in return being a voltage.

8. Electronic measuring device (1) according to any of the preceding claims, wherein the transducer is an accelerometer.

9. Electronic measuring device (1) according to the preceding claim, wherein the accelerometer is a piezoelectric accelerometer.

10. Electronic measuring device (1) according to claim 8, wherein the accelerometer is a MEMS accelerometer.
